# EUROPÄISCHE PATENTSCHRIFT

(11) **EP 1 436 163 B1**
(45) Veröffentlichungstag und Bekanntmachung des Hinweises auf die Patenterteilung: **06.08.2008**
(21) Anmeldenummer: 02762344.6
(22) Anmeldetag: 11.07.2002
(51) Int. Cl.: B60M 1/30

(54) **DEHNVERBINDER FÜR STROMSCHIENEN**
EXTENSIBLE CONNECTOR FOR CONDUCTOR RAILS
CONNECTEUR EXTENSIBLE POUR BARRES CONDUCTRICES

(30) Priorität: 17.10.2001 DE 10150694
(43) Veröffentlichungstag der Anmeldung: 14.07.2004
(73) Patentinhaber: Paul Vahle GmbH & Co. KG, 59174 Kamen (DE)
(72) Erfinder: SCHRÖDER, Arno, 44579 Castrop-Rauxel (DE); HEITMANN, Michael, 59174 Kamen (DE); WESTERMANN, Manuela, 59174 Kamen (DE)
(74) Vertreter: Lenzing, Andreas
(86) Internationale Anmeldenummer: PCT/EP2002/007724
(87) Internationale Veröffentlichungsnummer: WO 2003/033293

(56) Entgegenhaltungen:
- DE-A- 3 013 111
- DE-A- 19 755 513
- US-A- 3 813 502
- US-A- 4 219 108

## Beschreibung

Die vorliegende Erfindung betrifft einen Verbinder zum Verbinden von zwei Stromschienenabschnitten, wobei der Verbinder mindestens einen elektrischen Leiter aufweist und jeweils eines seiner Enden leitend mit jeweils einem Stromschienenabschnitt verbunden ist, der Verbinder ein Verbindungselement hat, das die zugewandten Enden der Stromschienenabschnitte miteinander verbindet.

Gattungsgemäße Stromschienenverbinder werden oft auch als Dehnverbinder bezeichnet, wobei diese Verbinder eine Längenänderung der Stromschienenabschnitte aufgrund von Temperatureinflüssen ausgleichen und den elektrischen Strom von einem Stromschienenabschnitt zum nächsten überleiten.

Der elektrische Leiter gattungsgemäßer Verbinder ist entweder flexibel oder starr ausgebildet, wobei bei der starren Ausbildung des elektrischen Leiters dieser derart geformt sein muß, daß bei Längenänderungen der Stromschienenabschnitte der elektrische Leiter verformt und somit seine Länge verändern kann. Sofern große elektrische Ströme von einem Stromschienenabschnitt zum nächsten übertragen werden müssen, sind relativ große Querschnitte des elektrischen Leiters des Verbinders notwendig. Da.mit dem Querschnitt die Flexibilität eines elektrischen Leiters abnimmt, werden häufig für große Stromstärken mehrere elektrische Leiter, z. B. flexible Kupferlitzen oder Kupferkabel, zur elektrischen Stromübertragung verwendet. Diese Kabel liegen außerhalb der Stromschiene und benötigen daher zusätzlichen Bauraum. Aufgrund der Tatsache, daß die Verbinder auf der der Schleiffläche abgewandten Seite der Stromschienenabschnitte befestigt sind, können die Enden der Stromschienenabschnitte nicht mittels Befestigungselementen an einem Träger oder sonstigen Teilen befestigt werden, so daß diese frei schwingen können. Wie bereits erläutert, ist der elektrische Leiter mit einem großen Querschnitt auszubilden, damit große elektrische Ströme übertragen werden können. Hierdurch ergibt sich daß Problem, daß relativ hohe Druckkräfte zur Veränderung des Luftspaltes zwischen den Enden der Stromschienenabschnitte aufgrund von Temperaturschwankungen entstehen, wodurch die Stromschienenaufhängungen großen Belastungen ausgesetzt sind.

Durch die Anpreßkraft eines Stromabnehmers wird die der Stromschienenabschnitt, insbesondere deren frei schwingende Enden, aus ihrer normalen Position herausbewegt, so daß die aneinandergrenzenden Enden der Stromschienenabschnitte nicht mehr stoßfrei aneinandergrenzen und hierdurch der Stromabnehmer beim Überfahren der Enden der Stromschienenabschnitte auf

Dauer beschädigt werden kann.

Ein Verbinder gemäß des Stands der Technik ist durch US-A-3 813 502 bekannt.

Aufgabe der vorliegenden Erfindung ist es, einen Verbinder bzw. Dehnverbinder für Stromschienenabschnitte bereitzustellen, der gewährleistet, daß die Stromschienenenden stoßfrei aneinandergrenzen und der auch bei hohen Stromstärken relativ kleine Abmessungen aufweist.

Diese Aufgabe wird erfindungsgemäß mit einem Verbinder mit den Merkmalen des Anspruchs 1 gelöst. Weitere vorteilhafte Ausgestaltungen dieses erfindungsgemäßen Verbinders ergeben sich durch die Merkmale der Unteransprüche.

Der erfindungsgemäße Verbinder bzw. Dehnverbinder dient zur Kompensation der Längenänderung der Stromschienenabschnitte zwischen definierten Festpunkten. Er vereinbart sowohl die elektrische Stromübertragung von Stromschienenabschnitt zu Stromschienenabschnitt sowie die mechanische Führung der Stromschienenabschnittsenden, um einen stoßfreien Übergang am Luftspalt im Bereich der Schleifflächen der Stromschienenabschnitte zu erzielen.

Hierzu ist vorteilhaft das Verbindungselement verschiebbar bzw. gleitend an den Enden der Stromschienenabschnitte gelagert. Die Enden der Stromschienenabschnitte sind durch das Verbindungselement vorteilhaft stets zueinander ausgerichtet. Durch die gleitende bzw. verschiebbare Lagerung an den zugewandten Enden benachbarter Stromschienenabschnitte des Verbindungselements können sich die Enden der Stromschienenabschnitte durch thermische Ausdehnung bzw. durch thermisches Zusammenziehen aufeinander zu bzw. voneinander weg bewegen, wobei sie stets zueinander vom Verbindungselement in Position gehalten werden.

Dadurch, daß der elektrische Leiter am Verbindungselement befestigt ist, verbleibt das Verbindungselement stets im Bereich der Enden der beiden Stromschienenabschnitte und benötigt keine zusätzliche Befestigung. Zur besseren Lagerung besitzt das Verbindungselement vorteilhaft ein Lagerteil aus verschleißfestem Kunststoff, durch das ein niedriger Reibkoeffizient zwischen Verbindungselement und Stromschienenabschnitt realisiert ist. Ferner ist es von Vorteil, wenn der elektrische Leiter aus einem Paket von zusammengefügten, flexiblen Lamellenbändern besteht. Hierdurch kann die benötigte Größe des Querschnitts der jeweiligen Strombelastbarkeit angepaßt werden, ohne die äußere Baugröße wesentlich zu beeinflussen. An den Kontaktstellen sind die einzelnen Lamellenbänder bzw. Folien preßverschweißt und aufgrund der Kontaktkorrosion mit Cupal-Blechen unterlegt.

Der elektrische Leiter, welcher insbesondere ein Cu-Lamellenband ist, ist vorteilhaft derart konstruiert, daß der gesamte Dehnweg auf zwei Teildehnwege aufgeteilt ist. Hierdurch wird die mechanische Beanspruchung im beweglichen Teilbereich des elektrischen Leiters stark reduziert. Dadurch, daß der elektrische Leiter am Verbindungselement befestigt, insbesondere angeschraubt ist, ergibt sich eine weitere Verbesserung der Biegesteifigkeit des gesamten Verbinders. Die Teildehnwege sind vorteilhaft durch eine wellenförmige Ausformung des elektrischen Leiters realisiert. Es ist jedoch ebenso möglich, eine sägezahnförmige Ausformung des elektrischen gleiters vorzusehen oder diesen in Schleifen zu verlegen. Durch die spezielle wellenförmige Ausführung ergibt sich vorteilhaft eine Reduzierung der benötigten Druckkraft zur Veränderung des Luftspaltes zwischen den Enden der Stromschienenabschnitte, womit die Belastung auf die Stromschienenaufhängungen vorteilhaft verringert wird.

Es ist ebenfalls von Vorteil, wenn bei im Querschnitt C-förmigen Stromschienenabschnitten die Breite des elektrischen Leiters bzw. des Cu-Lamellenbandes bezogen auf die Öffnung des C-Profils der Stromschienenabschnitte kleiner ist, so daß die insbesondere wellenförmige Ausformung bzw. die innere Halbwelle beim Zusammenschieben der Enden der Stromschienenabschnitte in das C-Profil abtauchen kann, wodurch sich vorteilhaft eine geringe Bauhöhe über den gesamten Dehnbereich des Verbinders erzielen läßt.

Nachfolgend wird anhand von Zeichnungen eine mögliche Ausführungsform des erfindungsgemäßen Verbinders näher erläutert.

Es zeigen:
- Figur 1:: Stromschienenabschnitte, verbunden durch einen erfindungsgemäßen Verbinder;
- Figur 2:: Anordnung gemäß Figur 1 mit durch thermische Längenänderung aneinander angenäherten Enden der Stromschienenabschnitte; sowie
- Figur 3:: Querschnittsdarstellung durch eine Anordnung gemäß der Figur 1.

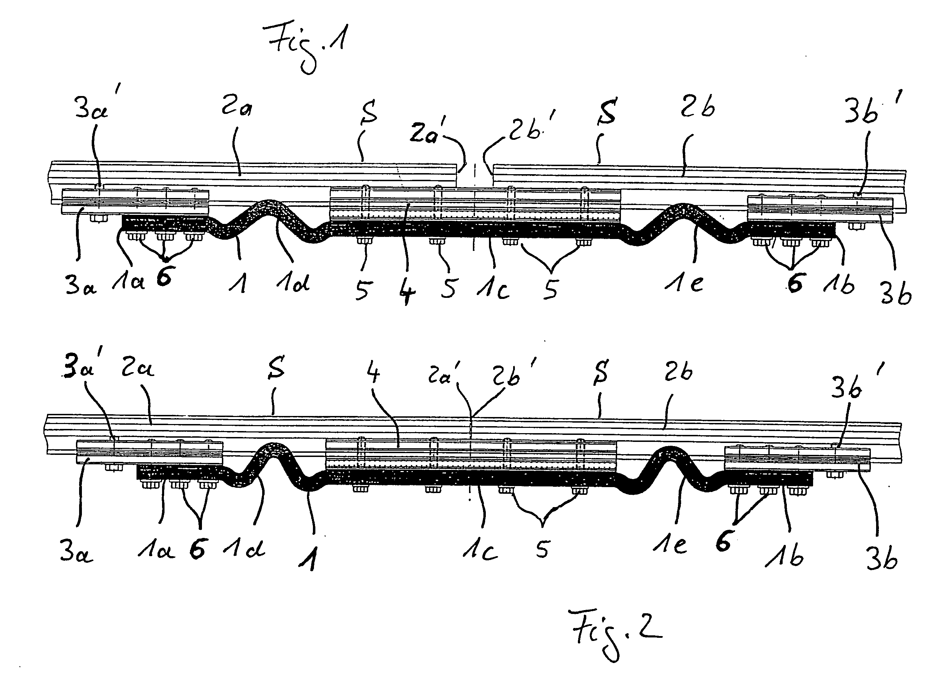

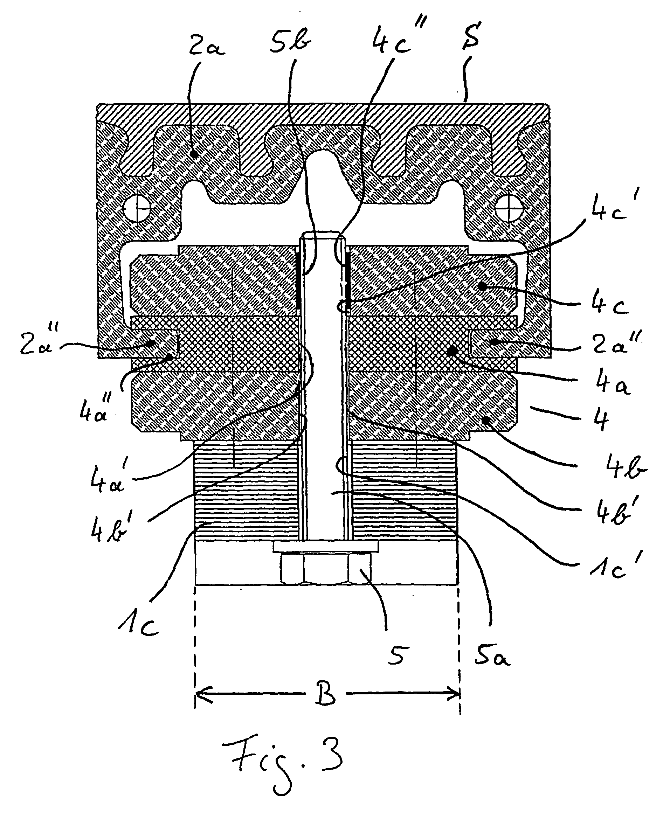

Die Figur 1 zeigt zwei Stromschienenabschnitte 2a und 2b, deren Enden 2a' und 2b' voneinander beabstandet sind. Die Stromschienenabschnitte 2a und 2b weisen jeweils eine in den Figuren 1 bis 3 nach oben weisende Schleiffläche S auf. Die Stromschienenabschnitte sind elektrisch über den erfindungsgemäßen Verbinder verbunden. Die Stromschienenabschnitte bestehen aus einem Aluminiumprofil, dessen Querschnitt im wesentlichen C-förmig ist (Figur 3). Der elektrische Leiter 1 dient zum Stromtransport von einem Stromschienenabschnitt zum anderen. Dazu sind Befestigungsmittel 3a bzw. 3b an den Stromschienenabschnitten 2a bzw. 2b befestigt, wobei jeweils ein Ende 1a bzw. 1b des elektrischen Leiters 1 an einem Befestigungsmittel 3a bzw. 3b mittels Befestigungsschrauben 6 leitend befestigt ist. Die Befestigungsmittel 3a bzw. 3b sind mittels Befestigungsschrauben 3a" bzw. 3b" fest an jedem Stromschienenabschnitt 2a bzw. 2b befestigt. Im Bereich der Enden 2a' bzw. 2b' der Stromschienenabschnitte 2a bzw. 2b ist ein Verbindungselement 4 angeordnet, welches verschiebbar bzw. gleitend in den als Profilkörper ausgebildeten Stromschienenabschnitten 2a bzw. 2b gelagert ist. An dem Verbindungselement 4 ist der mittlere Bereich 1c des elektrischen Leiters 1 mittels Befestigungsschrauben 5 befestigt. Das Verbindungselement 4 und elektrischer Leiter 1 versteifen sich hierdurch gegenseitig, wodurch das Gesamtsystem eine höhere Steifigkeit erhält.

Die Lagerung des Verbindungselements 4 in den Enden der Stromschienenabschnitte 2a bzw. 2b erfolgt in Richtung der Längserstreckung der Stromschienenabschnitte 2a bzw. 2b, so daß sich die Enden 2a' bzw. 2b' der Stromschienenabschnitte 2a und 2b aufgrund von Temperaturlängenänderungen einander annähern (Figur 2) oder voneinander entfernen können. Die Enden 2a' und 2b' der Stromschienenabschnitte 2a bzw. 2b werden durch das Verbindungselement 4 geführt, so daß die Schleifflächen S stets stoßfrei in einer Ebene liegen. Zwischen den Verbindungstücken 3a bzw. 3b und dem Verbindungselement 4 ist der elektrische Leiter 1 jeweils wellenförmig ausgeformt, so daß eine Längenänderung der Stromschienenabschnitte 2a und 2b durch diese Bereiche 1d und 1e des elektrischen Leiters 1 ausgeglichen werden können.

Wie in den Figuren 1 und 2 dargestellt, ist die Ausformung der Bereiche 1d und 1e dergestalt, daß sie aus zwei kleineren Halbwellen und einer mittleren größeren Halbwelle besteht, wobei die mittlere größere Halbwelle in Richtung der Stromschienenabschnitte 2a bzw. 2b weist. Sofern die Stromschienenabschnitte 2a und 2b durch die thermische Längenänderung die Befestigungselemente 3a und 3b aufeinander zu bewegen, kann durch die Bereiche 1d und 1e ein Längenausgleich stattfinden, wobei die mittleren Halbwellen durch ihre Ausgestaltung in die untere Öffnung des C-förmigen Profils der Stromabschnitte eingreifen bzw. abtauchen. Hierzu ist die Breite B des elektrischen Leiters, welcher insbesondere als Cu-Lamellenband gefertigt ist, kleiner als der Abstand der zur Führung des Verbindungselements dienenden kragenförmigen Vorsprünge 2a" des jeweiligen Stromschienenabschnitts, wodurch eine geringere Bauhöhe der gesamten Anordnung erzielt wird.

Wie in Figur 3 dargestellt, besteht das Verbindungselement 4 aus zwei plattenförmigen Teilen 4b und 4c und einem dazwischen angeordneten Lagerteil 4a, welches an seinen länglichen flachen Seiten Längsnuten 4a " aufweist, in die die Vorsprünge 2a " eingreifen.

Mehrere Schrauben 5 durchgreifen mit ihrem Schaft 5a den Bereich 1c des elektrischen Leiters 1, die plattenförmigen Teile 4b und 4c sowie das Lagerteil 4a. Hierzu weisen der elektrische Leiter 1, die Platten 4b und 4c sowie das Lagerteil 4a entsprechende Durchgangsbohrungen 1c', 4a', 4b' und 4c' auf. Die Schraube 5 weist an ihrem Schaftende ein Außengewinde 5b auf, welches mit einem Innengewinde 4c" der Platte 4c korrespondiert. Durch Anziehen der Schraube 5 werden mittels ihres Schraubenkopfes und der Platte 4c die von der Schraube 5 durchgriffenen Teile zusammengedrückt und dauerhaft gehalten. Dabei werden die Längsnuten 4a" in ihrer Passung nicht beeinflußt.

Zur Montage der Anordnung werden die Stromschienenabschnitte 2a und 2b nacheinander an nicht dargestellten Halterungen mittels Isolatoren montiert. Da zumindest das Verbindungselement 4 mit seinem Lagerteil 4a von der Stirnseite des Stromschienenabschnittsprofils aus auf die Vorsprünge 2a" aufgeschoben werden muß, muß zumindest das Verbindungselement 4 vor der Montage des zweiten Stromschienenabschnitts auf den noch zu montierenden oder den bereits montierten Stromschienenabschnitt vorher aufgeschoben werden. Um eine nachträgliche Montage des Verbinders bei bereits montierten Stromschienenabschnitten zu ermöglichen, ist es möglich, daß das Lagerteil 4a aus zwei Teilen besteht, wobei die beiden Teile dann ebenfalls durch die Schrauben 5 zusammengehalten werden.

Es ist selbstverständlich möglich, daß die Befestigungselemente 3a und 3b von ihrem prinzipiellen Aufbau ähnlich dem Aufbau des Verbindungselements 4 ausgestaltet sind, wobei dann das Lagerteil 4a, welches insbesondere bei dem Verbindungselement 4 aus Kunststoff gefertigt ist, durch ein baugleiches Teil, jedoch aus einem leitenden Werkstoff, ersetzt wird, damit sich ein möglichst geringer Übergangswiderstand zwischen dem Stromschienenabschnitt und dem elektrischen Leiter ergibt.

In einer weiteren, nicht dargestellten Ausführungsform, kann das Verbindungselement an einem Ende eines ersten Stromschienenabschnitts fest angelagert, insbesondere angeschraubt sein, wobei es im Ende des anderen Stromschienenabschnitts verschiebbar bzw. gleitend gelagert ist. Bei dieser Ausführungsform kann das Verbindungselement derart ausgestaltet sein, daß der fest angelagerte Teil des Verbindungselements den elektrischen Strom vom elektrischen Leiter zum Stromschienenabschnitt überträgt. Bei dieser Ausführungsform wird vorteilhaft nur noch ein Befestigungsmittel 3a bzw. 3b benötigt, welches an dem zweiten Stromschienenabschnitt befestigt ist. Allerdings erfolgt hier keine Aufteilung des Dehnwegs auf zwei Teildehnwege, die durch das Verbindungselement voneinander räumlich getrennt sind. Die Ausformungen des elektrischen Leiters müssen dabei den Erfordernissen entsprechend angepaßt werden. Um eine möglichst hohe Stabilität bei gleichzeitig kleiner Bauhöhe zu erzielen, ist bei dieser Ausführungsform der elektrische Leiter auch an dem Bereich des Verbindungselements befestigt, der gleitend bzw. verschiebbar an dem zweiten Stromschienenabschnitt gelagert ist. Hierdurch läßt sich eine höhere Steifigkeit des Bereichs des elektrischen Leiters erzielen, der sich zwischen dem Verbindungselement und dem Befestigungsmittel befindet.

## Patentansprüche

1. Verbinder zum Verbinden von zwei Stromschienenabschnitten (2a, 2b), wobei der Verbinder mindestens einen elektrischen Leiter (1) aufweist, und seine Enden (1a, 1b) leitend und fest mit jeweils einem Stromschienenabschnitt (2a, 2b) verbunden sind, wobei der Verbinder ein Verbindungselement (4) hat, das die zugewandten Enden (2a', 2b') der Stromschienenabschnitte (2a, 2b) miteinander verbindet, **dadurch gekennzeichnet, daß** das Verbindungselement (4) in bzw. an beiden aneinander zugewandten Enden (2a', 2b') der Stromschienenabschnitten (2a, 2b) verschiebbar bzw. gleitend gelagert ist, und der elektrische Leiter (1) an dem Verbindungselement (4) befestigt ist.

2. Verbinder nach Anspruch 1, **dadurch gekennzeichnet, daß** der mittlere Bereich (1c) des elektrischen Leiters (1) an dem Verbindungselement (4) befestigt ist.

3. Verbinder nach Anspruch 1 oder 2, **dadurch gekennzeichnet, daß** das Verbindungselement (4) die Stromschienenabschnitte (2a, 2b) derart in Position hält, daß die Schleifflächen (S) der Stromschienenabschnitte (2a, 2b) stoßfrei aneinandergrenzen.

4. Verbinder nach einem der vorhergehenden Ansprüche, **dadurch gekennzeichnet daß** das Verbindungselement (4) ein Lagerteil (4a) hat, das insbesondere aus einem verschleißfestem Werkstoff, insbesondere Kunststoff gefertigt ist.

5. Verbinder nach Anspruch 4, **dadurch gekennzeichnet, daß** das Lagerteil (4a) sich in Längsrichtung des Verbindungselements (4) erstreckende Nuten (4a") hat, die als Führungsprofil dienen und in die insbesondere kragenförmige Vorsprünge (2a", 2b") der Stromschienenabschnitte (2a, 2b) eingreifen.

6. Verbinder nach Anspruch 4 oder 5, **dadurch gekennzeichnet, daß** das Lagerteil (4a) zwischen zwei, insbesondere aus einem elektrisch leitenden Material gefertigten, plattenförmigen Teilen (4b, 4c) angeordnet ist, wobei an der dem Stromschienenabschnitt abgewandten Seite des einen plattenförmigen Teils (4b) der elektrische Leiter (1) mit seinem mittleren Bereich (1c) anliegt.

7. Verbinder nach Anspruch 6, **dadurch gekennzeichnet, daß** mittels mindestens einer Befestigungsschraube (5) die Teile (4b, 4c), das Lagerteil (4a) und der Leiter (1) zusammengehalten bzw. gegeneinander gepreßt werden.

8. Verbinder nach Anspruch 7, **dadurch gekennzeichnet, daß** die Befestigungsschraube (5) die Teile (4b, 4c), das Lagerteil (4a) und den Leiter (1) durchgreift, wobei das Teil (4c) eine Bohrung mit Innengewinde (4c') hat, welches mit dem Außengewinde (5b) der Befestigungsschraube (5) korrespondiert.

9. Verbinder nach einem der vorhergehenden Ansprüche, **dadurch gekennzeichnet, daß** der elektrische Leiter (1) mindestens eine Ausformung (1d, 1e) zur Längenänderung des Verbinders hat, die sich quer zur Längserstreckung des Leiters (1) ausdehnt bzw. erstreckt.

10. Verbinder nach Anspruch 9, **dadurch gekennzeichnet, daß** die Ausformung (1d, 1e) wellenförmig oder zickzackförmig ausgebildet ist.

11. Verbinder nach Anspruch 9 oder 10, **dadurch gekennzeichnet, daß** die Ausformung (1d, 1e) derart ausgebildet ist, daß dieser Bereich des Leiters ziehharmonikaartig in seiner Länge gestaucht oder gestreckt werden kann.

12. Verbinder nach einem der Ansprüche 9 bis 11, **dadurch gekennzeichnet, daß** die Ausformung jeweils aus zwei kleinen Halbwellen und einer dazwischen angeordneten größeren Halbwelle besteht, wobei die größere Halbwelle mit ihrem Wellenberg in Richtung eines Stromschienenabschnitts (2a, 2b) weist.

13. Verbinder nach einem der Ansprüche 9 bis 12, **dadurch gekennzeichnet, daß** jeweils mindestens eine Ausformung zwischen dem mittleren Bereich (1c), welcher am Verbindungselement (4) befestigt ist und jeweils einem Ende (1a, 1b) des elektrischen Leiters (1) angeordnet ist.

14. Verbinder nach einem der vorhergehenden Ansprüche, **dadurch gekennzeichnet, daß** der elektrische Leiter (1) aus gestapelten Folienblechen gebildet ist.

15. Verbinder nach Anspruch 14, **dadurch gekennzeichnet, daß** die Folienbleche miteinander preßverschweißt sind und mit Cupal-Blechen unterlegt sind.

16. Verbinder nach einem der vorhergehenden Ansprüche, **dadurch gekennzeichnet, daß** die Breite (B) des elektrischen Leiters (1) derart bemessen ist, daß der Leiter (1) zumindest mit Teilen seiner Ausformungen (1d, 1e) in Ausnehmungen der Stromschienenabschnitte eingreifen kann.

17. Verbinder nach einem der vorhergehenden Ansprüche, **dadurch gekennzeichnet, daß** die Breite (B) des elektrischen Leiters (1) kleiner ist als der Abstand der schmalen Stirnseiten der Vorsprünge (2a") voneinander.

## Claims

1. Connector for connecting two conductor rail portions (2a, 2b), the connector having at least one electrical conductor (1), and its ends (1a, 1b) being connected to a respective conductor rail portion (2a, 2b) in a conductive and fixed manner, the connector having a connection element (4) connecting the facing ends (2a', 2b') of the conductor rail portions (2a, 2b) to one another, **characterised in that** the connection element (4) is mounted in a displaceable or sliding manner in or on the two mutually facing ends (2a', 2b') of the conductor rail portions (2a, 2b), and the electrical conductor (1) is fastened to the connection element (4).

2. Connector according to claim 1, **characterised in that** the central region (1c) of the electrical conductor (1) is fastened to the connection element (4).

3. Connector according to either claim 1 or claim 2, **characterised in that** the connection element (4) holds the conductor rail portions (2a, 2b) in position in such a way that the sliding faces (S) of the conductor rail portions (2a, 2b) adjoin in an impact-free manner.

4. Connector according to any one of the preceding claims, **characterised in that** the connection element (4) has a bearing part (4a) which is manufactured, in particular, from a wear-resistant material, in particular plastics material.

5. Connector according to claim 4, **characterised in that** the bearing part (4a) has grooves (4a") extending in the longitudinal direction of the connection element (4), which grooves (4a") serve as a guide profile and in which grooves in particular collar-shaped projections (2a", 2b") of the conductor rail portions (2a, 2b) engage.

6. Connector according to either claim 4 or claim 5, **characterised in that** the bearing part (4a) is arranged between two plate-shaped parts (4b, 4c) manufactured in particular from an electrically conductive material, the electrical conductor (1) resting with its central region (1c) on the side of the one plate-shaped part (4b) remote from the conductor rail portion.

7. Connector according to claim 6, **characterised in that** the parts (4b, 4c), the bearing part (4a) and the conductor (1) are held together or pressed against one another by means of at least one fastening screw (5).

8. Connector according to claim 7, **characterised in that** the fastening screw (5) penetrates the parts (4b, 4c), the bearing part (4a) and the conductor (1), the part (4c) having a hole with an internal thread (4c') which corresponds to the external thread (5b) of the fastening screw (5).

9. Connector according to any one of the preceding claims, **characterised in that** the electrical conductor (1) has at least one shaping (1d, 1e) for changing the length of the connector, the shaping stretching or extending transversely to the longitudinal extent of the conductor (1).

10. Connector according to claim 9, **characterised in that** the shaping (1d, 1e) is undulating or zigzag shaped in design.

11. Connector according to either claim 9 or claim 10, **characterised in that** the shaping (1d, 1e) is designed in such a way that this region of the conductor can be compressed or stretched in its length in the manner of an accordion.

12. Connector according to any one of claims 9 to 11, **characterised in that** the shaping consists of two respective small half-waves and a larger half-wave arranged therebetween, the larger half-wave pointing with its wave peak in the direction of a conductor rail portion (2a, 2b).

13. Connector according to any one of claims 9 to 12, **characterised in that** at least one respective shaping is arranged between the central region (1c), which is fastened to the connection element (4), and a respective end (1a, 1b) of the electrical conductor (1).

14. Connector according to any one of the preceding claims, **characterised in that** the electrical conductor (1) is formed from stacked foil sheets.

15. Connector according to claim 14, **characterised in that** the foil sheets are pressure welded to one another and copper clad aluminium sheets are placed underneath.

16. Connector according to any one of the preceding claims, **characterised in that** the width (B) of the electrical conductor (1) is such that the conductor (1) can engage, at least with parts of its shapings (1d, 1e), in recesses of the conductor rail portions.

17. Connector according to one of the preceding claims, **characterised in that** the width (B) of the electrical conductor (1) is smaller than the spacing of the narrow end faces of the projections (2a") from one another.

## Revendications

1. Connecteur pour relier deux segments de barrettes conductrices (2a, 2b), le connecteur présentant au moins un conducteur électrique (1) et ses extrémités (1a, 1b) étant reliées de manière conductrice et fixe avec respectivement un segment de barrette conductrice (2a, 2b), le connecteur possédant un élément de connexion (4) qui relie ensemble les extrémités se faisant face (2a', 2b') des segments de barrettes conductrices (2a, 2b), **caractérisé en ce que** l'élément de connexion (4) est monté de manière déplaçable et/ou coulissante dans et/ou sur les deux extrémités tournées l'une vers l'autre (2a', 2b') des segments de barrettes conductrices (2a, 2b), et le conducteur électrique (1) étant fixé sur l'élément de connexion (4).

2. Connecteur selon la revendication 1, **caractérisé en ce que** la zone médiane (1c) du conducteur électrique (1) est fixée sur l'élément de connexion (4).

3. Connecteur selon la revendication 1 ou 2, **caractérisé en ce que** l'élément de connexion (4) maintient les segments de barrettes conductrices (2a, 2b) en position de manière à ce que les surfaces de frottement (S) des segments de barrettes conductrices (2a, 2b) se jouxtent sans heurts.

4. Connecteur selon l'une des revendications précédentes, **caractérisé en ce que** l'élément de connexion (4) possède un élément d'appui (4a), lequel est en particulier réalisé avec un matériau résistant à l'usure, en particulier du plastique.

5. Connecteur selon la revendication 4, **caractérisé en ce que** l'élément d'appui (4a) possède des rainures (4a") s'étendant en direction longitudinale de l'élément de connexion (4), lesquelles servent de profil de guidage et dans lesquelles en particulier des saillies en forme de rebord (2a", 2b") des segments de barrettes conductrices (2a, 2b) sont en prise.

6. Connecteur selon la revendication 4 ou 5, **caractérisé en ce que** l'élément d'appui (4a) est disposé entre deux pièces en forme de plaques (4b, 4c) fabriquées en particulier en un matériau électroconducteur, le conducteur électrique (1) reposant avec sa partie médiane (1 c) contre le côté opposé au segment de barrette conductrice de l'une des pièces en forme de plaque (4b).

7. Connecteur selon la revendication 6, **caractérisé en ce qu'**à l'aide d'au moins une vis de fixation (5), les pièces (4b, 4c), l'élément d'appui (4a) et le conducteur (1) sont maintenus et/ou pressés ensembles.

8. Connecteur selon la revendication 7, **caractérisé en ce que** la vis de fixation (5) traverse les pièces (4b, 4c), l'élément d'appui (4a) et le conducteur (1), la pièce (4c) possédant un alésage avec un filetage intérieur (4c') lequel correspond au filetage extérieur (5b) de la vis de fixation (5).

9. Connecteur selon l'une des revendications précédentes, **caractérisé en ce que** le conducteur électrique (1) possède au moins une partie formée (1 d, 1e) pour modifier la longueur du connecteur, laquelle s'étire et/ou s'étend transversalement à l'étendue longitudinale du conducteur (1).

10. Connecteur selon la revendication 9, **caractérisé en ce que** la partie formée (1 d, 1e) est réalisée en forme de vagues ou en forme de zigzags.

11. Connecteur selon la revendication 9 ou 10, **caractérisé en ce que** la partie formée (1d, 1e) est réalisée de manière à ce que cette zone du conducteur peut être comprimée ou étirée sur sa longueur à la manière d'un accordéon.

12. Connecteur selon l'une des revendications 9 à 11 , **caractérisé en ce que** la partie formée se compose respectivement de deux petites demi-ondes et d'une demi-onde plus grande disposée entre les deux, la plus grande des demi-ondes pointant avec son sommet en direction d'un segment de barrette conductrice (2a, 2b).

13. Connecteur selon l'une des revendications 9 à 12, **caractérisé en ce que** respectivement au moins une partie formée est disposée entre la zone médiane (1 c) qui est fixée sur l'élément de connexion (4) et respectivement une extrémité (1a, 1b) du conducteur électrique (1).

14. Connecteur selon l'une des revendications précédentes, **caractérisé en ce que** le conducteur électrique (1) est formé par des tôles en feuilles empilées.

15. Connecteur selon la revendication 14, **caractérisé en ce que** les tôles en feuilles sont soudées ensembles avec pression et présentent des tôles en cupal placées en-dessous.

16. Connecteur selon l'une des revendications précédentes, **caractérisé en ce que** la largeur (B) du conducteur électrique (1) est dimensionnée de manière à ce que le conducteur (1) puisse se mettre en prise dans des évidements des segments de barrettes conductrices au moins avec des parties de ses formations (1 d, 1e).

17. Connecteur selon l'une des revendications précédentes, **caractérisé en ce que** la largeur (B) du conducteur électrique (1) est plus petite que la distance entre les côtés frontaux étroits des saillies (2a").
